# EUROPEAN PATENT APPLICATION

(11) **EP 1 702 948 A2**
(43) Date of publication of application: **20.09.2006**
(21) Application number: 06425119.2
(22) Date of filing: 27.02.2006
(51) Int. Cl.: C08J 9/32, C08J 9/00, C08L 75/04, A47C 27/14, B64D 11/06

(54) **Structure stuffed with melamine and polyurethane foam**

(30) Priority: 18.03.2005 IT RM20050126
(71) Applicant: AVIOINTERIORS S.P.A., I-04013 Tor Tre Ponti Latina (IT)
(72) Inventor: Veneruso, Alberto Aviointeriors S.p.A., 04019 Latina (LT) (IT)
(74) Representative: Iannone, Carlo Luigi

(57) **Abstract**

The invention relates to a stuffed structure, comprising a core and a coating, said core being comprised of melamine foam and said coating being comprised of a polyurethan foam comprising, for 100 parts in weight of a polyol, between 15 and 30 parts in weight of graphite and between 4 and 10 parts in weight of hollow charges of a glass material, and between 50 and 70 parts in weight of isocyanate.

## Description

The present invention relates to a structure stuffed with melamine and polyurethan foam.

More specifically, the invention relates to a stuffed structure, particularly suitable for aeronautic field, although it is not exclusively destined to this specific use, being it possible using the same in every other case, said structure having such features permitting obtaining a very light structure, without jeopardising its other properties, such as mechanical strength, density and fire behaviour.

Since many years, solutions are looked for in the aeronautic field for realising stuffed structures for seats able passing the aeronautic tests, requirements of which are very limiting, and in any case enough comfortable and as more light as possible.

Particularly, it would be interesting obtaining a solution permitting obtaining a polyurethan foam suitable for moulding cushions fulfilling the aeronautic rules and, particularly, having the following features:
- fire behaviour: passing the Oil Burner Test (ref: FAR 25 Appendix F Part III)
- density: <= 60 Kg/m³

In this assumption, have been recently realised cushions comprised of polyurethan foam with the addition of graphite in order to tar the compound and conferring to the same the anti-flame properties that the polyurethan foam does not have.

Some solutions of this kind are described in European Patents EP 0414868 and EP 0450403, both in the name of Metzeler Schaum GmbH. A process is described in both patents for realising a polyurethan foam, which is flexible, elastic, having anti-flame properties, and wherein a polyol and a poli-isocyanate are employed mixed with graphite.

Introduction of a particular kind of graphite in the reaction mixture as suggested in the above documents permitted obtaining a polyurethan foam provided with good physical - mechanical properties and having such features to pass the Oil Burner Test.

However, said solution is in any case characterised by negative aspects, particularly due to the fact that density of the foamed piece obtained by said mixture had to be not lower than 70 Kg/m³ in order to pass the Oil Burner Test. On the other hand, said density is too high for aeronautic cushions and is a serious limit to the commercialisation of the same cushions.

More recently, it has been suggested the use of melamine for realising stuffed structures. This solution is described in the International Patent Application n° WO 03/072391, filed in the name of J.S.O.

Use of melamine for realising stuffed structures is known since many years, although in fields different from the aeronautic field. It requires that the same structure is coated in order to permit the use of the same structure, mainly for obtaining sufficient comfort conditions for the passenger.

The Applicant, starting from the above state of the art, has realised a stuffed structure obviating the above mentioned drawbacks, permitting obtaining a stuffed structure able passing the above mentioned tests and that is very light and comfortable.

These results are obtained according to the present invention by the realisation of stuffed structure the core of which is comprised of melamine foam, said core being completely coated by a polyurethan foam providing, in its reaction mixture, a further very light component, particularly hollow glass micro spheres, the low density of which (about 150 Kg/m³) contributes to raise the volume of the liquid mixture already before the expansion.

It is therefore specific object of the present invention a stuffed structure, comprising a core and a coating, said core being comprised of melamine foam and said coating being comprised of a polyurethan foam comprising, for 100 parts in weight of a polyol, between 15 and 30 parts in weight of graphite and between 4 and 10 parts in weight of hollow charges of a glass material, and between 50 and 70 parts in weight of isocyanate.

According to the invention, preferably between 18 and 25 parts in weight of graphite are provided, still more preferably 20 parts in weight of graphite.

Particularly, an expandable graphite is employed.

Furthermore, according to the invention, preferably between 6 and 8 parts in weight of hollow charges of glass material are provided, still more preferably 7 parts in weight of hollow charges of glass material.

Still according to the invention, said isocyanate is preferably modified diphenil methane 4, 4' di-isocyanate.

According to the invention, said glass material hollow charges are glass hollow micro spheres.

Furthermore, according to the invention, said hollow charges of glass material can be mixed with polyol, with isocyanate or with both of them, during the realisation of polyurethan foam.

Still according to the invention, trietilphosphate can be added, particularly in an amount of 1 - 5 parts in weight, preferably 2 - 4 parts in weight, and still more preferably 3 parts in weight with respect to 100 parts of polyol.

Preferably, coupling between core and coating is obtained by an adhesive, particularly a water base adhesive.

The invention further relates to a stuffed structure employing a polyurethan foam as described in the above.

The present invention will be now described, for illustrative but not limitative purposes, according to its preferred embodiments, with particular reference to the figures of the enclosed drawings, wherein:

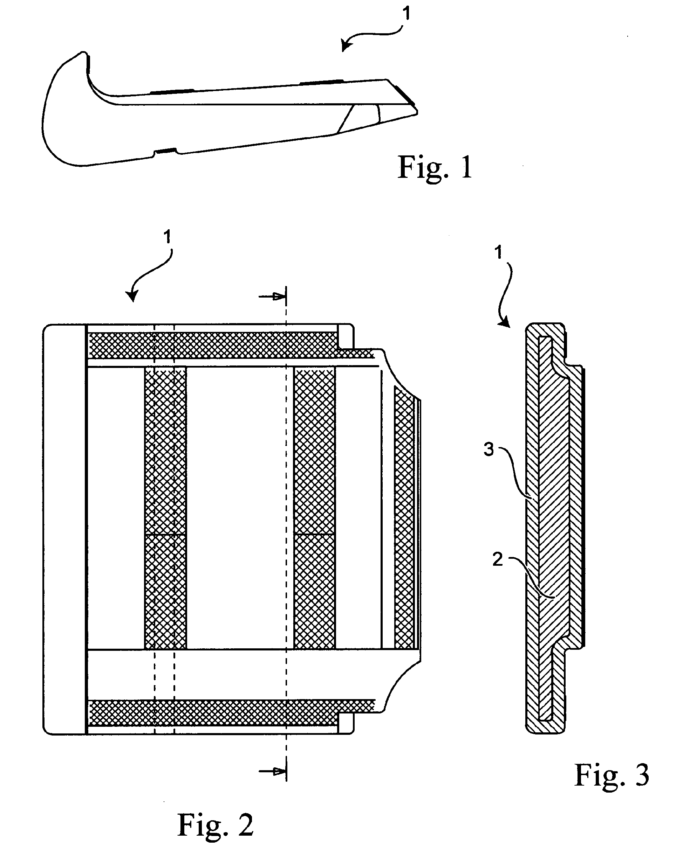

figure 1 is a lateral view of a stuffed structure according to the invention;
figure 2 is a top view of a stuffed structure according to the invention; and
figure 3 is a section view of the stuffed structure of figure 1.

Observing the figures of the enclosed drawings, it can be noted a stuffed structure, generically indicated by reference number 1, providing an melamine resin inner core 2, and a polyurethan foam outer coating 3.

Particularly, melamine resin can be Basotec® resin from BASF.

As already mentioned, different are the possible combinations of melamine and polyurethan foam according to the invention.

The physical - chemical features of the components and of the weight composition of the reaction mixture are provided in the following for illustrative and not limitative purpose.

It has already been mentioned in the preceding that isocyanate could theoretically not be present, being it possible assuming realising the foam only employing polyol. In any case, amount of isocyanate employed is variable (also in composition C) since exclusively this feature determines the softness of the cushion to be realised (the higher is the amount of isocyanate, the harder is the cushion obtained; the lower is the amount of isocyanate, the softer is the cushion obtained).

When providing percentages and composition of the polyurethan compound, we will always start from 100 parts in weight of polyol, to which the amount of the other components are referred. Obviously, if the percentage composition is wished, polyol proportion varies accordingly.

Formulas 1 and 2 take into consideration only the main components (polyol, isocyanate, graphite and micro spheres): in formula 1, solid parts (graphite and micro spheres) are all dispersed within polyol, while in composition 2, they are dispersed both in component "a" (polyol) and in component "b" (isocyanate).

A fifth component is introduced in FORMULA 3: trietilphosphate (TEP). It is a low viscosity anti-flame liquid permitting obtaining two advantages:
- easy workability of the mixture
- higher chances of passing the Oil Burner Test.

Particularly, as far as isocyanate is concerned, it is employed diphenil 4,4' di-isocyanate (MDI) having the following features

| % NCO | 20÷30 | 22÷28 | 27 |
|---|---|---|---|
| functionality | 2÷3 | 2,2÷2,7 | 2,3 |

As far as the graphite is concerned, an expandable graphite is employed.

As far as the glass hollow micro spheres are concerned, micro spheres comprised of fine grain inert mineral powders are employed.

| | FORMULA N. 1 | | | FORMULA N. 2 | | | FORMULA N. 3 | | |
|---|---|---|---|---|---|---|---|---|---|
| | A | B | C | A | B | C | A | B | C |
| **Comp "a"** polyol | 100 | 100 | 100 | 100 | 100 | 100 | 100 | 100 | 100 |
| graphite | 15 ÷ 30 | 18 ÷ 25 | 20 | 15 ÷ 30 | 18 ÷ 25 | 20 | 15 ÷ 30 | 18 ÷ 25 | 22 |
| micro spheres | 4 ÷ 10 | 6 ÷ 8 | 7 | ― | ― | ― | | | |
| TEP | ― | ― | ― | ― | ― | ― | 1 ÷ 5 | 2 ÷ 4 | 3 |
| **Comp "b"** | | | | | | | | | |
| isocyanate | 50 ÷ 70 | 50 ÷ 70 | 50 ÷ 70 | 50 ÷ 70 | 50 ÷ 70 | 50 ÷ 70 | 50 ÷ 70 | 50 ÷ 70 | 50 ÷ 70 |
| micro spheres | ― | ― | ― | 6 ÷ 12 | 8 ÷ 10 | 9 | 6 ÷ 12 | 8 ÷ 10 | 9 |

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Stuffed structure, comprising a core and a coating, said core being comprised of melamine foam and said coating being comprised of a polyurethan foam comprising, for 100 parts in weight of a polyol, between 15 and 30 parts in weight of graphite and between 4 and 10 parts in weight of hollow charges of a glass material, and between 50 and 70 parts in weight of isocyanate.

2. Stuffed structure according to claim 1, **characterised in that** between 18 and 25 parts in weight of graphite are provided.

3. Stuffed structure according to claim 1 or 2, **characterised in that** 20 parts in weight of graphite are provided.

4. Stuffed structure according to one of the preceding claims, **characterised in that** expandable graphite is employed.

5. Stuffed structure according to one of the preceding claims, **characterised in that** between 6 and 8 parts in weight of hollow charges of glass material are provided.

6. Stuffed structure according to one of the preceding claims, **characterised in that** 7 parts in weight of hollow charges of glass material are provided.

7. Stuffed structure according to one of the preceding claims, **characterised in that** said isocyanate is modified diphenil methane 4, 4' di-isocyanate.

8. Stuffed structure according to one of the preceding claims, **characterised in that** said glass material hollow charges are glass hollow micro spheres.

9. Stuffed structure according to one of the preceding claims, **characterised in that** said hollow charges of glass material are mixed with polyol, with isocyanate or with both of them, during the realisation of polyurethan foam.

10. Stuffed structure according to one of the preceding claims, **characterised in that**, trietilphosphate is added, in an amount of 1 - 5 parts in weight.

11. Stuffed structure according to claim 10, **characterised in that** 2-4 parts in weight, and still more preferably 3 parts in weight, of trietilphosphate is added with respect to 100 parts of polyol.

12. Stuffed structure according to one of the preceding claims, **characterised in that** coupling between core and coating is obtained by an adhesive, particularly a water base adhesive.

13. Stuffed structure **characterised in that** it employs a polyurethan foam according to each one of the claims 1 - 12.
